(19) Europäisches Patentamt
European Patent Office
Office européen des brevets

(11) **EP 3 001 752 A1**

(12) **EUROPEAN PATENT APPLICATION**
published in accordance with Art. 153(4) EPC

(43) Date of publication:
**30.03.2016 Bulletin 2016/13**

(51) Int Cl.:
**H04W 72/12** *(2009.01)* **H04W 28/16** *(2009.01)*

(21) Application number: **13885382.5**

(22) Date of filing: **23.05.2013**

(86) International application number:
**PCT/JP2013/064416**

(87) International publication number:
**WO 2014/188573 (27.11.2014 Gazette 2014/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Fujitsu Limited**
**Kawasaki-shi, Kanagawa 211-8588 (JP)**

(72) Inventor: **EZAKI Takato**
**Kawasaki-shi**
**Kanagawa 211-8588 (JP)**

(74) Representative: **Cooper-Rolfe, Elizabeth Louise**
**Haseltine Lake LLP**
**Lincoln House, 5th Floor**
**300 High Holborn**
**London WC1V 7JH (GB)**

(54) **BASE STATION, TERMINAL, AND SCHEDULING METHOD**

(57) In a base station (30), a network IF (33) acquires a scheduled communication timing for a terminal (50) in a cell (C10), and a first scheduling index for the terminal (50). A scheduling unit (34) then determines whether the terminal (50) is permitted to communicate at the scheduled communication timing in the cell (C30), based on the scheduling index for the terminal (50), and a second scheduling index for another terminal located in the cell (C30).

# FIG.6

## Description

[Technical Field]

The present invention relates to a base station, a terminal, and a scheduling method.

[Background Art]

Conventionally, many devices have been developed to increase the transmission capacity of a communication system (hereinafter, sometimes referred to as a "system capacity"). For example, the 3rd Generation Partnership Project Long Term Evolution (3GPP LTE) has been discussing a technology for increasing the system capacity using "small cells" in addition to "macrocells". A "cell" herein is defined by the "communication area" and the "channel frequency" of a base station apparatus (hereinafter, sometimes simply referred to as a "base station"). A "communication area" may be the entire reachable area of the radio waves transmitted by the base station (hereinafter, sometimes referred to as "coverage area"), or a segment of the coverage area (what is called a sector). A "channel frequency" is a unit of the frequencies used in the communication by the base station, and is defined by a center frequency and a bandwidth. The channel frequency is a part of the "operating bandwidth" assigned to the entire system. A "macrocell" is a cell of a base station where high-power transmission is possible, that is, a cell belonging to a base station with a large coverage area. A "small cell" is a cell of a base station with low-power transmission capability, that is, a cell belonging to a base station with a small coverage area.

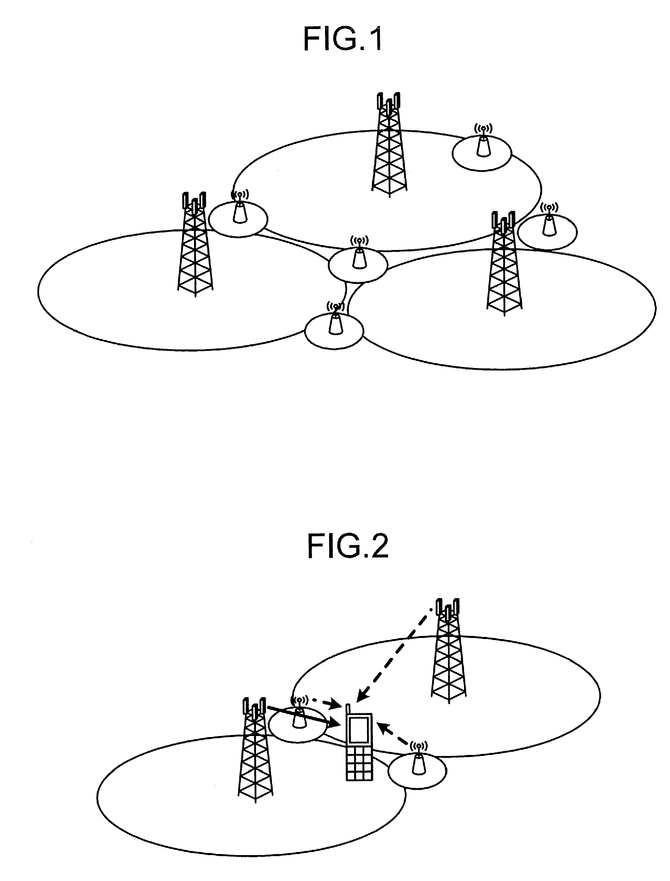

In other words, currently under discussion is a configuration of a communication system in which the cells of different sizes are intermixed, as illustrated in FIG. 1. Possible configurations of such a communication system include, for example, a first configuration in which a plurality of small cells are mixed with macrocells, or a second configuration in which a plurality of small cells are deployed in a manner unrelated to macrocells. FIG. 1 is a schematic illustrating an exemplary configuration of the communication system.

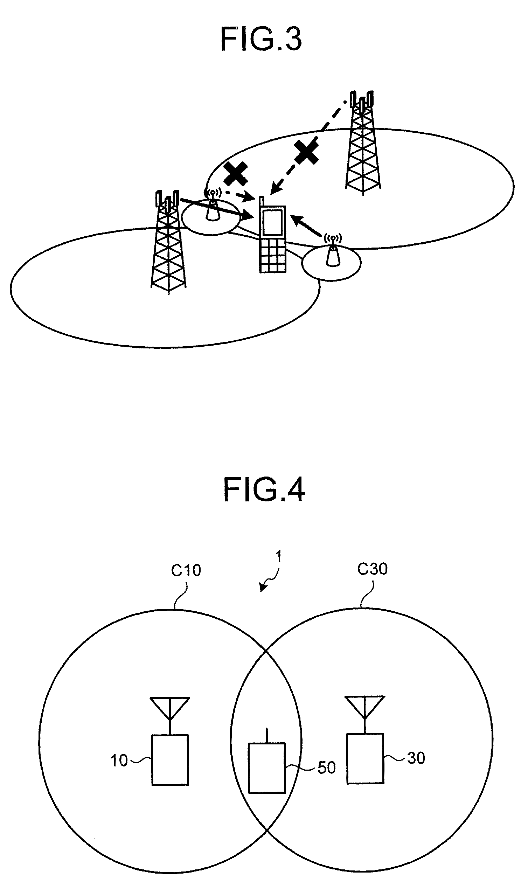

With increased variations of cell sizes and an increased number of cells, interference between the cells may become a concern. In other words, radio waves transmitted from other base stations may interfere communication between a base station and a terminal apparatus (hereinafter, sometimes simply referred to as a "terminal"), as illustrated in FIG. 2. FIG. 2 is a schematic for explaining such interference between the cells. As a technology for reducing the interference between the cells, a coordinated multi-point (CoMP) communication (transmission and reception) technology, that is, a "coordinated communication" technology illustrated in FIG. 3 is now under development. FIG. 3 is a schematic for explaining the coordinated communication. Coordinated communication is a technology that allows a plurality of points (base stations or antennas) to communicate simultaneously with a terminal. In other words, the coordinated communication is a technology for causing a plurality of points to transmit the same data to one terminal, or causing one terminal to transmit the same data to a plurality of points, for example. The coordinated communication provides the advantages of reducing the interference from non-coordinated cells on the receiver side of the communication, and of increasing the reception power at a desired wave (that is the space diversity effect), so that the throughput at the cell-end terminal can be improved. The interference reduction effect can be further improved by stopping the communication of the cells (that is, the non-coordinated cells) other than the cells related to the coordinated communication (that is, the coordinated cells), as illustrated in FIG. 3.

[Citation List]

[Patent Citation]

Patent Document 1: Japanese Laid-open Patent Publication No. 2012-212956
Patent Document 2: Japanese Laid-open Patent Publication No. 2011-071993
Patent Document 3: Japanese Laid-open Patent Publication No. 2010-258693

[Non Patent Citation]

Non Patent Document 1: "Coordinated multipoint transmission/reception techniques for LTE-Advanced", IEEE Wireless Commun. Mag., vol. 17, no. 4, June 2010
Non Patent Document 2: "Greedy and progressive user scheduling for CoMP wireless networks", in Proc. IEEE International Conference on Communication, June 2012

[Summary of Invention]

[Technical Problem]

The coordinated communication, however, may deteriorate scheduling efficiency. In other words, because the coordinated communication is communication involving a plurality of coordinated cells, a possible scheduling approach for the coordinated communication is scheduling considering every terminal located in each of the coordinated cells. In this case, scheduling in each of the cells that could have been executed in parallel is executed serially, and therefore, the scheduling efficiency may deteriorate. Furthermore, when a plurality of base stations corresponding to a plurality of respective coordinated cells perform scheduling in a coordinated manner every time the scheduling timing arrives, many pieces of information will be exchanged between the base stations, rendering such an implementation difficult.

The technology disclosed herein is made in consideration of the above, and an object of the present invention is to provide a base station, a terminal, and a scheduling method capable of improving the scheduling efficiency.

[Solution to Problem]

According to an aspect disclosed herein, when scheduling in a second cell, for a candidate terminal performing coordinated communication using a first cell and the second cell is performed, a scheduled communication timing for the candidate terminal in the first cell and a scheduling index for the candidate terminal are acquired. Whether the candidate terminal is permitted to communicate at the scheduled communication timing in the second cell is determined based on the scheduling index for the candidate terminal and a scheduling index for another terminal that is located in the second cell.

[Advantageous Effects of Invention]

According to the aspect disclosed herein, the scheduling efficiency can be improved.

[Brief Description of Drawings]

FIG. 1 is a schematic illustrating an exemplary configuration of the communication system.
FIG. 2 is a schematic for explaining the interference between the cells.
FIG. 3 is a schematic for explaining the coordinated communication.
FIG. 4 is a schematic illustrating an exemplary communication system according to a first embodiment of the present invention.
FIG. 5 is a block diagram illustrating an exemplary first base station according to the first embodiment.
FIG. 6 is a block diagram illustrating an exemplary second base station according to the first embodiment.
FIG. 7 is a block diagram illustrating an exemplary terminal according to the first embodiment.
FIG. 8 is a flowchart illustrating an exemplary candidate terminal determining process performed by a first base station.
FIG. 9 is a flowchart illustrating an exemplary scheduling process and first scheduling index calculation process performed by the first base station.
FIG. 10 is a flowchart illustrating an exemplary coordinated communication permissibility determining process performed by the second base station.
FIG. 11 is a schematic for explaining the exemplary coordinated communication permissibility determining process performed by the second base station.
FIG. 12 is a flowchart illustrating an exemplary first scheduling index correction process performed by the second base station.
FIG. 13 is a block diagram illustrating an exemplary base station according to a second embodiment of the present invention.
FIG. 14 is a schematic illustrating a hardware configuration of the terminal.
FIG. 15 is a schematic illustrating a hardware configuration of the base station.

[Embodiments for Carrying Out the Invention]

Some embodiments of a base station, a terminal, and a scheduling method according to the present application will now be explained in detail with reference to some drawings. These embodiments, however, are not intended to limit the scope of the base station, the terminal, and the scheduling method according to the invention in any way. In the embodiments, elements having the same functions will be assigned with the same reference signs, and redundant explanations thereof are omitted. Explained below is an example in which the communication system is an LTE or LTE-Advanced system, but the present invention is not limited thereto.

First Embodiment

Communication System Overview

FIG. 4 is a schematic illustrating an exemplary communication system according to a first embodiment of the present invention. In FIG. 4, this communication system 1 includes s base station 10, a base station 30, and a terminal 50. In FIG. 4, a cell C10 is defined by the coverage area of the base station 10 and a first channel frequency. A cell C30 is defined by the coverage area of the base station 30 and a second channel frequency. The terminal 50 illustrated in FIG. 4 is located in an area where the cell C10 and the cell C30 overlap each other. The first channel frequency may be the same as or different from the second channel frequency. The numbers of the base station 10, the base station 30, and the terminal 50 illustrated in FIG. 4 are merely exemplary, and the present invention is not limited thereto. The base station 10 and the base station 30 may be connected to a higher-level station over a wire, or may be connected to each other via a higher-level station. The base station 10 and the base station 30 may also be connected logically, or physically directly over a wire. Furthermore, the base station 10 and the base station 30 may be base stations using a radio remote header (RRH), femto base stations, or small base stations in the LTE system, for example.

The base station 10 receives a report of a channel quality of each cell (including the cell C10 and the cell C30) at each user (including the terminal 50 and other terminals) located in the cell C10, from each of such users. In this example, as the channel quality, Reference Signal Received Power (RSRP) or Reference Signal Received Quality (RSRQ) is used. Each of the users measures the channel quality of the corresponding cell based on the reference signal (RS) transmitted in the cell where the user is located.

Based on the channel quality of the cell reported by each of the users, the base station 10 determines whether the corresponding user is to communicate via the coordinated communication between the cell C10 covered by the base station 10 and another cell, that is, whether the user is to be candidate terminal for the coordinated communication. In the explanation hereinafter, such a candidate terminal for the coordinated communication is sometimes simply referred to as a "candidate terminal". For example, the base station 10 compares the first channel quality of the cell C10 covered by the base station 10 with the second channel quality of a cell other than the cell C10 reported by each user. If there is any user reporting the first channel quality and the second channel quality having a difference that is smaller than a threshold, the base station 10 determines (establishes) the user to be a candidate terminal. In the explanation hereinafter, it is assumed that the terminal 50 is a user that is determined to be a candidate terminal.

The base station 10 then performs scheduling in the cell C10 for the terminal 50 that is a candidate terminal. In other words, the base station 10 determines a scheduled communication timing, a communication method (including the communication frequency and the communication data size), and the like, for the terminal 50. In the explanation hereinafter, a scheduled communication timing and a communication method are sometimes collectively referred to as resource information. This is determined based on, for example, the quality-of-service (QoS) class describing the details of a service, a target data rate, a remaining data size in the buffer, or the like, or any combination thereof related to the terminal 50. More specifically, for example, the base station 10 performs the scheduling for the terminal 50 in the manner described below. The base station 10 notifies the terminal 50 that is a candidate terminal that the terminal 50 is a candidate terminal, and of the information of the cell (in this example, the cell C30) that is to be used in the coordinated communication. For this notification, upper-level layer signaling, for example, is used. The terminal 50 measures the channel quality of the cell C10 currently connecting and the channel quality of the cell C30, and combines these channel qualities, and reports information of the synthesized combined quality to the base station 10. In other words, the terminal 50 reports channel state information (CSI) over the coordinated communication to the base station 10. The base station 10 then determines subcarriers to be used for the terminal 50 by selecting subcarriers corresponding to a predetermined bandwidth sequentially from those with the higher qualities, based on the received channel state information. The base station 10 then determines the communication data size to be used in the communication with the terminal 50, by determining a code rate and a modulation scheme based on the subcarriers to be used and the channel state information corresponding to the subcarriers. The base station 10 then determines a communication cycle for the communication with the terminal 50, based on the determined communication data size and target data rate. In other words, periodic scheduling is used for the terminal 50 that is a candidate terminal. The scheduling for a candidate terminal may be performed before (that is, be prioritized over) the scheduling of the terminals other than the candidate terminal. The scheduling for a candidate terminal may be performed at a predetermined cycle to improve the communication efficiency.

The base station 10 then calculates, for the terminal 50 that is a candidate terminal, a "scheduling index (that is, a scheduling metric)" used when the base station 30 performs scheduling for the cell C30. The scheduling index for the candidate terminal will be explained later in detail.

The base station 10 then notifies the base station 30 of the calculated scheduling index for the terminal 50, and of the determined resource information for the terminal 50 (including the scheduled communication timing and the communication scheme described above). For the notification, X2 that is an inter-base-station interface is used, as an example.

The base station 30 then performs scheduling based on the scheduling index for the terminal 50 received from the base station 10 and scheduling indices for the respective terminals other than the terminal 50 that are located in the cell C30. In the explanation hereinafter, the scheduling index for the terminal 50 is referred to as a "first scheduling index", and the scheduling index for a terminal other than the terminal 50 that is located in the cell C30 is sometimes referred to as a "second scheduling index". Specifically, the base station 30 determines whether the terminal 50 is permitted to communicate at the scheduled communication timing in the cell C30, based on the first scheduling index and the second scheduling index. The scheduled communication timing in the cell C30 is the same as the scheduled communication timing in the cell C10 described above.

As described above, the base station 10 performs periodic scheduling for a candidate terminal, and calculates a first scheduling index for the candidate terminal. The base station 10 then notifies the base station 30 of the determined resource information and the calculated first scheduling index. The base station 30 then determines whether the terminal 50 is permitted to communicate at the scheduled communication timing in the cell C30, based on the first scheduling index and the second scheduling index.

This configuration of the base station 10 and the base station 30 allow the base station 30 to perform the scheduling for the coordinated communication at the same priority as the scheduling for terminals other than the terminal 50 that are in the same cell C30, and independently from the base station 10. In this manner, the scheduling efficiency for the coordinated communication can be improved, and exchange of information between the base station 10 and the base station 30 can be minimized.

In actual implementations, the base station 30 performs the same process as the base station 10, although an explanation thereof is omitted herein.

Exemplary Configuration of First Base Station

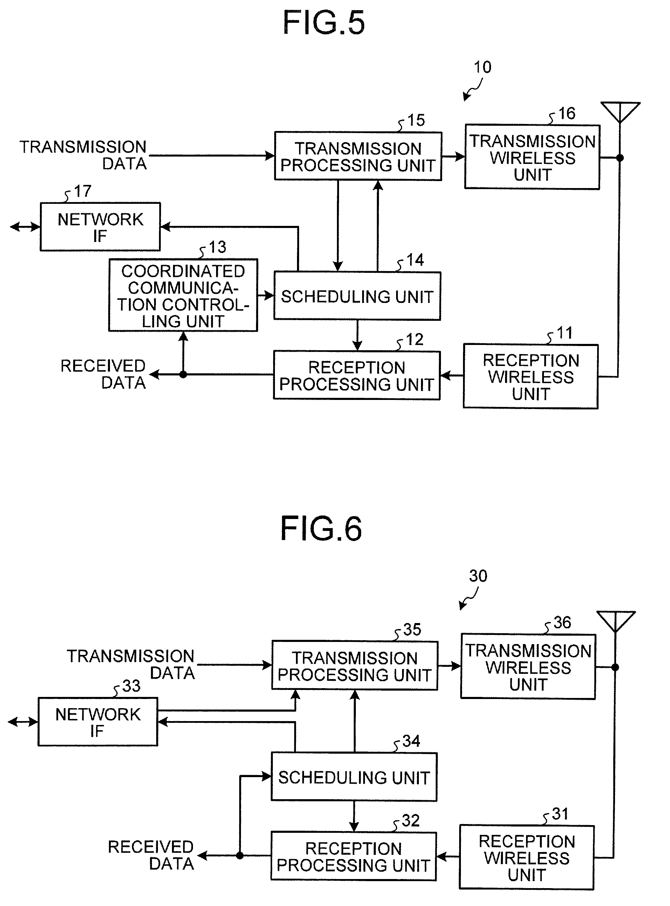

FIG. 5 is a block diagram illustrating an exemplary first base station according to the first embodiment. In FIG. 5, the base station 10 includes a reception wireless unit 11, a reception processing unit 12, a coordinated communication controlling unit 13, a scheduling unit 14, a transmission processing unit 15, a transmission wireless unit 16, and a network interface (IF) 17.

The reception wireless unit 11 applies a predetermined receiving wireless process, such as downconversion and digital conversion, to a received signal received via the antenna, and outputs the received signal applied with the receiving wireless process to the reception processing unit 12.

The reception processing unit 12 applies a predetermined receiving process (such as demodulation and decoding) to the received signal that is received from the reception wireless unit 11, and outputs the received data to the coordinated communication controlling unit 13 and subsequent functional units. At this time, the reception processing unit 12 extracts data addressed to each user from the resources assigned to the corresponding user by the scheduling unit 14. When the received signal is an orthogonal frequency division multiplexing (OFDM) signal, the reception processing unit 12 also performs a process such as inverse fast Fourier transform (IFFT).

The coordinated communication controlling unit 13 then extracts information of the cell channel quality reported by each of the users that are located in the cell C10, from the received data received from the reception processing unit 12. The coordinated communication controlling unit 13 then determines whether the coordinated communication between the cell C10 covered by the base station 10 and another cell is to be used for the corresponding user, that is, whether each of the users is to be a candidate terminal for which the coordinated communication is used, based on the channel qualities of the cells reported from that corresponding user. Specifically, the coordinated communication controlling unit 13 compares the first channel quality reported from each of the users in the cell C10 with the channel quality of a cell other than the cell C10. If there is any user for which the difference between the first channel quality and the second channel quality is smaller than the threshold, the coordinated communication controlling unit 13 determines (establishes) that the user (in this example, the terminal 50) is to be a candidate terminal. The coordinated communication controlling unit 13 then outputs information related to the terminal 50 that is determined to be a candidate terminal to the scheduling unit 14.

The scheduling unit 14 performs scheduling for the terminal 50 that is a candidate terminal in the cell C10 in the manner described above. In other words, the base station 10 determines resource information such as a scheduled communication timing and a communication method (including the communication frequency and the communication data size) for the terminal 50.

The scheduling unit 14 then transmits information indicating that the terminal 50 is a candidate terminal and the determined resource information to the terminal 50, via the transmission processing unit 15, the transmission wireless unit 16, and the antenna.

The scheduling unit 14 also calculates a first scheduling index for the terminal 50 that is a candidate terminal, so as to allow the first scheduling index to be used by the base station 30 for scheduling in the cell C30.

Specific examples of the first scheduling index will now be explained.

Specific Example 1

A proportional fairness (PF) metric will now be explained as a specific example 1 of the first scheduling index. In other words, the scheduling unit 14 calculates the first scheduling index based on following Equation (1).

$$M_{CoMP} = r_{CoMP}/(S/T) \qquad (1)$$

The second scheduling indices for terminals outside the scope of the coordinated communication are calculated by following Equation (2).

$$M_{conventional} = r_{normal}/R \quad (2)$$

$M_{conventional}$ denotes a scheduling metric for a terminal not to be using the coordinated communication. $M_{CoMP}$ denotes a scheduling metric for a candidate terminal to be using the coordinated communication. $r_{normal}$ is a possible instantaneous communication throughput (that is an estimated throughput) to be achieved when the terminal not to be using the coordinated communication communicates in a cell. $r_{CoMP}$ denotes a possible communication throughput (that is an estimated throughput) to be achieved when a candidate terminal using the coordinated communication communicates via the coordinated communication. $r_{CoMP}$ can be calculated based on the combined quality described above. R denotes the actual average throughput achieved by the terminal not using the coordinated communication. S denotes the communication data size, and T denotes the communication cycle.

By using the scheduling index explained as the specific example 1, a terminal with a higher wireless quality and a higher possible instantaneous communication throughput has a higher scheduling index, among the terminals with the same average throughput. A terminal with less past communication opportunities and a lower average throughput has a higher scheduling index, among the terminals with the same possible communication throughput.

Specific Example 2

The following metric will now be explained as a specific example 2 of the first scheduling index. In other words, the scheduling unit 14 calculates the first scheduling index based on following Equation (3).

$$M_{CoMP} = 1/(S/T) \quad (3)$$

The second scheduling index for a terminal not using the coordinated communication is calculated by following Equation (4).

$$M_{conventional} = 1/R \quad (4)$$

With the scheduling index explained in the specific example 2, a terminal with a lower average throughput always has a higher metric, without giving any consideration to the instantaneous wireless quality of the terminal. Therefore, when this scheduling index is used, scheduling is implemented in such a manner that every terminal has the same level of throughput.

Specific Example 3

The following metric will now be explained as a specific example 3 of the first scheduling index. In other words, the scheduling unit 14 calculates the first scheduling index based on following Equation (5).

$$M_{CoMP} = r_{CoMP} \quad (5)$$

The second scheduling index for a terminal not using the coordinated communication is calculated by following Equation (6).

$$M_{conventional} = r_{normal} \quad (6)$$

The scheduling index explained in the specific example 3 enables a terminal with a higher wireless quality to be always selected, so that the throughput of the entire system can be maximized as much as possible.

The scheduling unit 14 then transmits the calculated first scheduling index for the terminal 50 and the determined resource information for the terminal 50 to the base station 30 via the network IF 17.

The transmission processing unit 15 then generates a transmission signal by applying a predetermined transmitting process (such as encoding and modulation) to the input transmission data and the information received from the scheduling unit 14, and outputs the transmission signal to the transmission wireless unit 16. The transmission processing unit 15 then maps the data that is addressed to a user to the resources assigned by the scheduling unit 14 to that user. When the transmission signal is an OFDM signal, the transmission processing unit 15 also performs a process such as fast Fourier transform (FFT).

The transmission wireless unit 16 then generates a wireless signal by applying a predetermined transmission wireless process, such as digital-to-analog conversion and up-conversion, to the transmission signal received from the transmission processing unit 15, and transmits the generated wireless signal via the antenna.

The network IF 17 is an interface with other base stations including the base station 30. In other words, the network IF 17 transmits a signal to the base station 30, and receives (acquires) a signal transmitted by the base station 30.

Exemplary Configuration of Second Base Station

FIG. 6 is a block diagram illustrating an exemplary second base station according to the first embodiment. In FIG. 6, the base station 30 includes a reception wireless unit 31, a reception processing unit 32, a network IF 33, a scheduling unit 34, a transmission processing unit 35, and a transmission wireless unit 36.

The reception wireless unit 31 performs a predetermined receiving wireless process, such as downconversion and digital conversion, to a received signal received via the antenna, and outputs the received signal applied with the receiving wireless process to the reception processing unit 32.

The reception processing unit 32 applies a predetermined receiving process (such as demodulation and decoding) to the received signal received from the reception wireless unit 31, and outputs the received data to the scheduling unit 34 and subsequent functional units. At this time, the reception processing unit 32 extracts the data addressed to each user, from the resources assigned to that user by the scheduling unit 34. For example, when a signal indicating permission for communicating with the terminal 50 is received from the scheduling unit 34, the reception processing unit 32 prepares to receive a signal that will be transmitted by the terminal 50 at the scheduled communication timing. When the received signal is an OFDM signal, the reception processing unit 12 also performs a process such as IFFT.

The network IF 33 acquires the first scheduling index for the terminal 50, the resource information for the terminal 50, and the transmission data addressed to the terminal 50 from the base station 30. The network IF 33 then outputs the first scheduling index for the terminal 50 and the resource information for the terminal 50 to the scheduling unit 34. The network IF 33 also outputs the transmission data addressed to the terminal 50 to the transmission processing unit 35.

The scheduling unit 34 extracts information related to the channel quality of each cell reported from each user located in the cell C10, from the received data received from the reception processing unit 32. The scheduling unit 34 then calculates second scheduling indices for the terminals other than the terminal 50 that are located in the cell C30.

The scheduling unit 34 then performs scheduling based on the first scheduling index for the terminal 50 and the second scheduling indices for the terminals other than the terminal 50 that are in the cell C30.

Specifically, because the periodic scheduling is used for the terminal 50, every time the scheduled communication timing of the terminal 50 arrives, the scheduling unit 34 determines whether the terminal 50 is permitted to communicate in the cell C30 based on the first scheduling index and the second scheduling index.

More specifically, for each scheduling timing, the scheduling unit 34 sorts the scheduling indices in the descending order of index size, and selects the terminals to be scheduled at the scheduling timing, in the number corresponding to a predetermined number of scheduling indices that are ranked higher. The periodicity of the scheduling timing is shorter than the communication cycle of the terminal 50. The scheduling unit 34 makes the first scheduling index for the terminal 50 a target to be ranked at each scheduling timing, but the terminal 50 actually communicates only at the scheduled communication timing, even if the first scheduling index is ranked at a predetermine position or higher at the scheduling timing. The scheduling unit 34 then determines, at each of the scheduling timings that are present between the preceding scheduled communication timing and the current scheduled communication timing, whether the terminal 50 is permitted to communicate at the current scheduled communication timing based on the position where the first scheduling index is ranked.

At the scheduled communication timing at which the terminal 50 is permitted to communicate, the scheduling unit 34 outputs a signal indicating that the terminal 50 is permitted to communicate to the transmission processing unit 35 and to the reception processing unit 32. In this manner, the coordinated communication is executed for the terminal 50 at the scheduled communication timing.

For example, when a downlink coordinated communication for the terminal 50 is permitted, the scheduling unit 34 transmits a signal indicating that the communication with the terminal 50 is permitted to the transmission processing unit 35. This signal causes the transmission processing unit 35 to generate a transmission signal from the data addressed to the terminal 50, and to transmit the transmission signal to the terminal 50 at the scheduled communication timing, via the transmission wireless unit 36 and the antenna.

When permitted for the terminal 50 is an uplink coordinated communication, the scheduling unit 34 outputs a signal indicating that the communication with the terminal 50 is permitted to the transmission processing unit 35. This signal indicating that the terminal 50 is permitted to notify is then transmitted to the terminal 50, and the terminal 50 performs the uplink coordinated communication, based on this signal, at the scheduled communication timing. When permitted for the terminal 50 is an uplink coordinated communication, the scheduling unit 34 also outputs a signal indicating that the communication with the terminal 50 is permitted to the reception processing unit 32. This signal causes the reception processing unit 32 to prepare to receive a signal that will be transmitted by the terminal 50 at the scheduled communication timing.

Based on the result of determining whether the terminal 50 is permitted to communicate at the current scheduled communication timing, the scheduling unit 34 may correct the first scheduling index that is used in scheduling the terminal 50 at the current scheduled communication timing, and uses the corrected first scheduling index as the first scheduling index in the upcoming scheduled communication timing. For example, when the scheduling unit 34 determines that the terminal 50 is permitted to communicate at the current timing, the scheduling unit 34 may subtract a predetermined value from the first scheduling index that is used in the current determination, and use the result as the first scheduling index in the upcoming determination. When the scheduling unit 34 determines that the terminal 50 is not permitted to communicate as a result of the current determination, the scheduling unit 34 may add a predetermined value to the first scheduling index used in the current determination, and use the result as the first scheduling index in the upcoming determination. Such a process of first scheduling index correction enables the communication of the terminals to be scheduled more fairly.

The transmission processing unit 35 generates a transmission signal by applying a predetermined transmitting process (such as encoding and modulation) to the input transmission data and information received from the scheduling unit 34, and outputs the transmission signal to the transmission wireless unit 36. At this time, the transmission processing unit 35 maps the data that is addressed to a user to the resources assigned by the scheduling unit 34 to that user. For example, when a signal indicating that the terminal 50 is permitted to communicate is received from the scheduling unit 34, the transmission processing unit 35 generates a transmission signal from the data addressed to the terminal 50, and transmits the transmission signal to the terminal 50 at the scheduled communication timing via the transmission wireless unit 36 and the antenna. When the transmission signal is an OFDM signal, the transmission processing unit 35 also performs a process such as FFT.

The transmission wireless unit 36 then generates a wireless signal by applying a predetermined transmission wireless process, such as digital-to-analog conversion and up-conversion, to the transmission signal received from the transmission processing unit 35, and transmits the generated wireless signal via the antenna.

Exemplary Configuration of Terminal

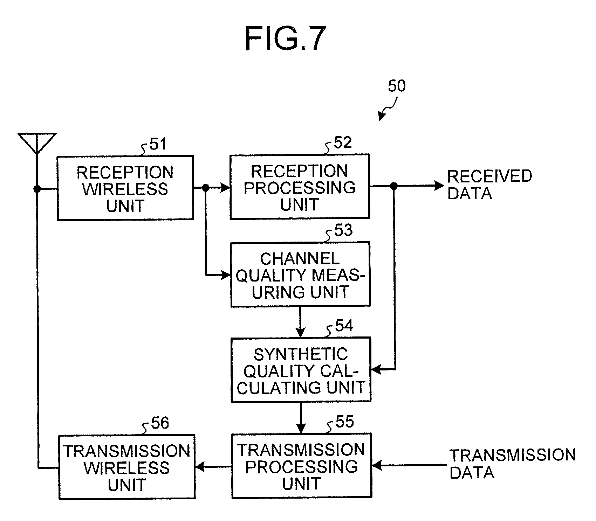

FIG. 7 is a block diagram illustrating an exemplary terminal according to the first embodiment. In FIG. 7, the terminal 50 includes a reception wireless unit 51, a reception processing unit 52, a channel quality measuring unit 53, a combined quality calculating unit 54, a transmission processing unit 55, and a transmission wireless unit 56.

The reception wireless unit 51 performs a predetermined receiving wireless process, such as downconversion and digital conversion, to a received signal received via the antenna, and outputs the received signal applied with the receiving wireless process to the reception processing unit 52.

The reception processing unit 52 applies a predetermined receiving process (such as demodulation and decoding) to the received signal received from the reception wireless unit 51, and outputs the received data to the channel quality measuring unit 53, the transmission processing unit 55, and subsequent functional units. At this time, the reception processing unit 52 extracts the data addressed to the terminal that is provided with the reception processing unit 52, from the resources indicated by the control signal that is addressed to the terminal 50. When the received signal is an OFDM signal, the reception processing unit 12 also performs a process such as IFFT.

The channel quality measuring unit 53 measures the channel qualities of respective cells where the terminal is located, based on reference signals transmitted in the respective cells. The channel quality measuring unit 53 then outputs the measured channel qualities of the respective cells to the combined quality calculating unit 54.

The combined quality calculating unit 54 then combines the channel qualities of the coordinated cells when the received data includes information indicating that the terminal is a candidate terminal, and outputs the information related to the resultant combined quality to the transmission processing unit 55.

The transmission processing unit 55 generates a transmission signal by applying a predetermined transmitting process (such as encoding and modulation) to the input transmission data and the information received from the combined quality calculating unit 54, and outputs the transmission signal to the transmission wireless unit 56.

The transmission wireless unit 56 then generates a wireless signal by applying a predetermined transmission wireless process such as digital-to-analog conversion and up-conversion to the transmission signal received from the transmission processing unit 55, and transmits the generated wireless signal via the antenna.

Exemplary Operation of Communication System

An exemplary processing operation performed by the communication system 1 configured in the manner described above will now be explained.

Candidate Terminal Determining Process

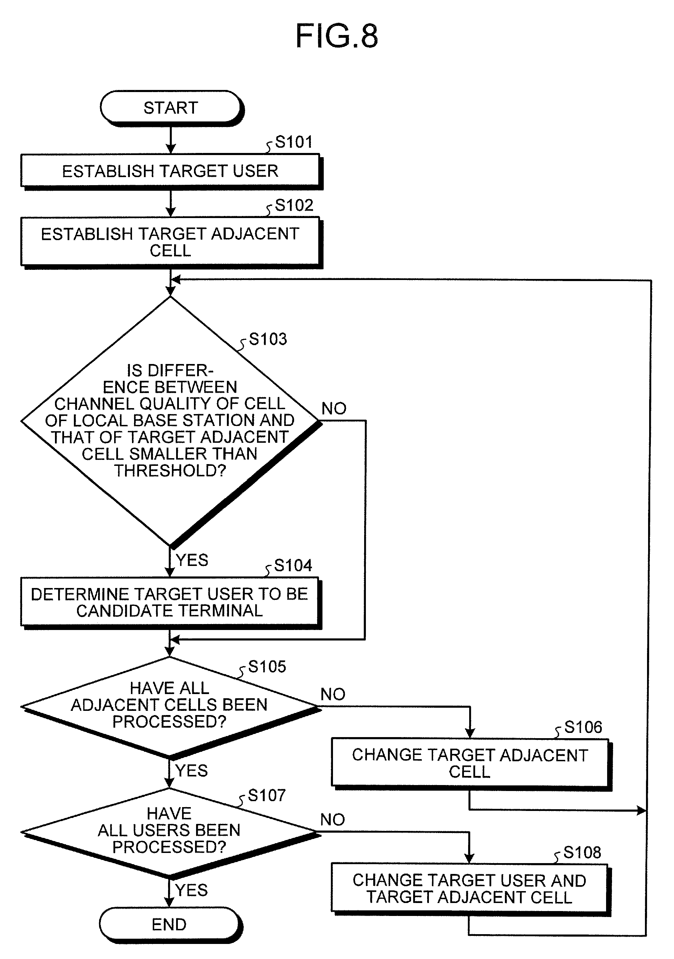

FIG. 8 is a flowchart illustrating an exemplary candidate terminal determining process performed by the first base station.

In the base station 10, the coordinated communication controlling unit 13 establishes one of all of the users located in the cell of the base station 10 (that is, the cell C10), as a target user (Step S101).

The coordinated communication controlling unit 13 then selects a cell from all of the adjacent cells that are adjacent to the cell of the base station 10 as a target adjacent cell (Step S102).

The coordinated communication controlling unit 13 then determines whether the difference between the channel quality of the cell of the local base station 10 and that of the target adjacent cell is smaller than the threshold (Step S103). If the difference is smaller than the threshold (Yes at Step S103), the coordinated communication controlling unit 13 determines the target user to be a candidate terminal (Step S104). If the difference is equal to or more than the threshold (No at Step S103), the process is shifted to Step S105.

The coordinated communication controlling unit 13 then determines whether all of the adjacent cells have been processed (Step S105). If there is any adjacent cell not having been processed yet (No at Step S105), the coordinated communication controlling unit 13 changes the target adjacent cell to an adjacent cell not processed yet (Step S106). In other words, the process of Step S103 and Step S104 is performed to each of the adjacent cells, for a single target user.

If there is no more adjacent cell not processed yet (Yes at Step S105), the coordinated communication controlling unit 13 determines whether all of the users have been processed (Step S107). If there is any user not having been processed yet (No at Step S107), the coordinated communication controlling unit 13 changes the target user and the target adjacent cell (Step S108). In other words, the process of Step S103, Step S104, Step S105, and Step S106 is performed to each of the users. If there is no remaining user not processed yet (Yes at Step S107), the coordinated communication controlling unit 13 ends the process.

Scheduling Process and First Scheduling Index Calculation Process for Candidate Terminal

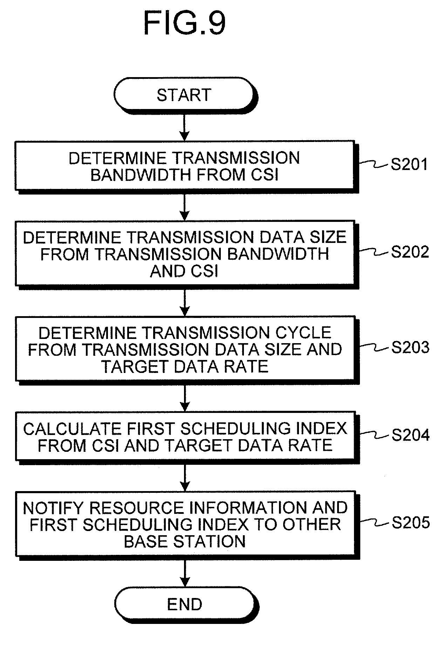

FIG. 9 is a flowchart illustrating an exemplary scheduling process and first scheduling index calculation process performed by the first base station.

In the base station 10, the scheduling unit 14 determines a transmission bandwidth from the channel state information (CSI) acquired by the communication via the coordinated communication (Step S201). The scheduling unit 14 also determines the transmission data size from the determined transmission bandwidth and the CSI acquired by the communication via the coordinated communication (Step S202). The scheduling unit 14 also determines the transmission cycle from the determined transmission data size and a target data rate (Step S203).

The scheduling unit 14 then calculates a first scheduling index from the CSI acquired by the communication via the coordinated communication and the target data rate (Step S204). In this example, the first scheduling index described in the specific example 1 is used.

The scheduling unit 14 then notifies another base station (that is, the base station 30) of the determined resource information and the calculated first scheduling index (Step S205).

Coordinated Communication Permissibility Determining Process

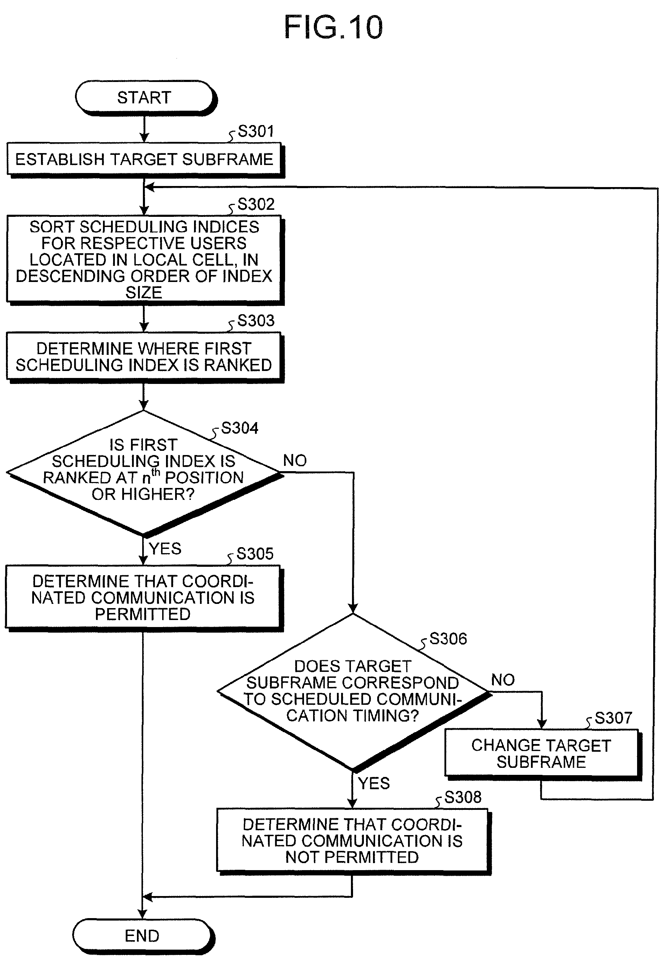

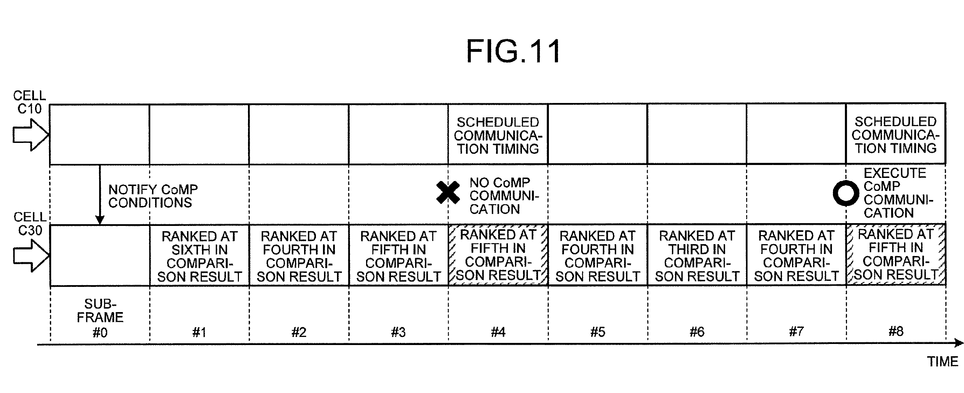

FIG. 10 is a flowchart illustrating an exemplary coordinated communication permissibility determining process performed by the second base station. FIG. 11 is a schematic for explaining the exemplary coordinated communication permissibility determining process performed by the second base station.

In the base station 30, the scheduling unit 34 establishes a target subframe (Step S301).

The scheduling unit 34 then sorts the scheduling indices for the respective users that are located in the cell of the base station 30, in the descending order of index size (Step S302). The indices sorted by the scheduling unit 34 include the first scheduling index and the second scheduling index.

The scheduling unit 34 determines where the first scheduling index is ranked (Step S303). For example, the first scheduling index is ranked at the sixth position in the subframe #1 illustrated in FIG. 11.

The scheduling unit 34 determines whether a specified first scheduling index is ranked within an $n^{th}$ position or higher (Step S304). Any natural number may be assigned to n. In FIG. 11, three is assigned to n.

If the specified first scheduling index is ranked at the $n^{th}$ position or higher (Yes at Step S304), the scheduling unit 34 determines to permit a terminal 50 corresponding to the first scheduling index to communicate at the upcoming scheduled communication timing (Step S305). In other words, at the upcoming scheduled communication timing, the terminal 50 will communicate via the coordinated communication between the cell C10 and the cell C30. In other words, because the first scheduling index is ranked at the third position or higher in the subframe #6 illustrated in FIG. 11, the terminal 50 communicates via the coordinated communication in the subframe #8, which is the upcoming scheduled communication timing.

If the specified first scheduling index is ranked at the $n^{th}$ position or lower (No at Step S304), the scheduling unit 34 determines whether the target subframe corresponds to a scheduled communication timing (Step S306).

If the target subframe does not correspond to a scheduled communication timing (No at Step S306), the scheduling unit 34 changes the target subframe (Step S307). In other words, the scheduling unit 34 shifts the target subframe to the next subframe. For example, because the subframe #1 in FIG. 11 does not correspond to a scheduled communication timing, the target subframe is changed to the subframe #2.

If the target subframe corresponds to a scheduled communication timing (Yes at Step S306), the scheduling unit 34 determines that the terminal 50 corresponding to the first scheduling index is not permitted to communicate at the upcoming scheduled communication timing (Step S308).

In FIG. 11, if the first scheduling index is ranked at the third position or higher in none of the subframes #1 to #4 in the process in the flowchart illustrated in FIG. 10, the coordinated communication is not executed at the scheduled communication timing corresponding to the subframe #4. If the first scheduling index is ranked at the third position or higher in one or more of the subframes #5 to #8, the coordinated communication is executed at the scheduled communication timing corresponding to the subframe #8.

A reference for determining whether the coordinated communication is to be executed at the scheduled communication timing is not limited to the example described above. For example, another possible reference is whether the number of times in which the first scheduling index is ranked at a predetermined position or higher at the scheduling timings between the preceding scheduled communication timing and the current scheduled communication timing is equal to or more than a predetermined count. Another possible reference is whether the sum of the ranks of the first scheduling index at the respective scheduling timings between the preceding scheduled communication timing and the current scheduled communication timing is less than a predetermined threshold.

First Scheduling Index Correction Process

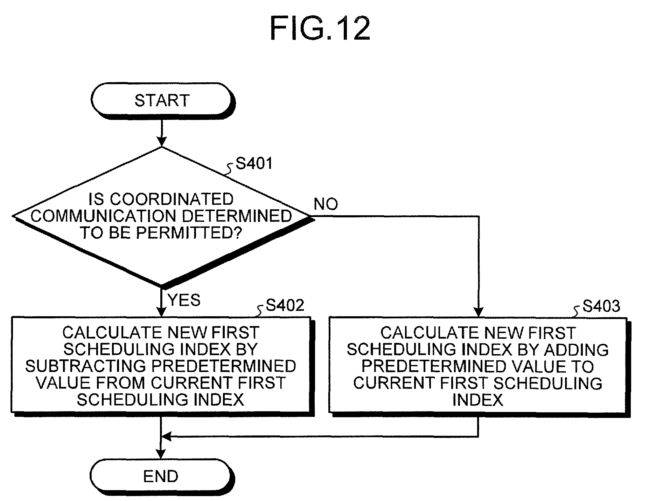

FIG. 12 is a flowchart illustrating an exemplary first scheduling index correction process performed by the second base station.

In the base station 30, the scheduling unit 34 determines whether the terminal 50 is permitted to communicate via the coordinated communication at the scheduled communication timing (Step S401).

If the terminal 50 is permitted to communicate via the coordinated communication at the scheduled communication timing (Yes at Step S401), the scheduling unit 34 calculates a new first scheduling index by subtracting a predetermined value from the current first scheduling index (Step S402). For example, in FIG. 11, because the scheduling unit 34 determines that the terminal 50 is permitted to communicate via the coordinated communication in the subframe #8, the scheduling unit 34 calculates a new first scheduling index by subtracting the predetermined value from the first scheduling index used in the subframes #5 to #8. The scheduling unit 34 then uses this new first scheduling index in the subframes #9 to #13.

If the terminal 50 is not permitted to communicate via the coordinated communication at the scheduled communication timing (No at Step S401), the scheduling unit 34 calculates a new first scheduling index by adding a predetermined value to the current first scheduling index (Step S403). For example, in FIG. 11, because the scheduling unit 34 determines that the terminal 50 is not permitted to communicate via the coordinated communication in the subframe #4, the scheduling unit 34 calculates a new first scheduling index by adding the predetermined value to the first scheduling index used in the subframes #1 to #4. The scheduling unit 34 then uses the new first scheduling index in the subframes #5 to #8.

As described above, according to the embodiment, in the base station 30, the network IF 33 acquires the scheduled communication timing for the terminal 50 and the first scheduling index for the terminal 50 in the cell C10. The scheduling unit 34 then determines whether the terminal 50 is permitted to communicate at the scheduled communication timing in the cell C30, based on the scheduling index for the terminal 50 and the second scheduling indices for the other terminals located in the cell C30.

This configuration of the base station 30 enables the base station 30 to schedule the coordinated communication at the same priority as the terminals other than the terminal 50 located in the cell C30, and independently from the base station 10. In this manner, the efficiency of the coordinated communication scheduling can be improved, and exchanges of information between the base station 10 and the base station 30 can be minimized.

The first scheduling index for the terminal 50 may be a ratio of a first estimated throughput that is based on the channel quality in the cell C10 and the channel quality in the cell C30 at the terminal 50, with respect to a second estimated throughput that is based on the cycle of the scheduled communication timing (the communication cycle) and the communication data size for the terminal 50 (see the specific example 1 described above).

Alternatively, the first scheduling index for the terminal 50 may also be an estimated throughput that is based on the channel quality of the cell C10 and the channel quality of the cell C30 at the terminal 50 (see the specific example 2 described above).

Alternatively, the first scheduling index for the terminal 50 may be the inverse of an estimated throughput that is based on the cycle of the scheduled communication timing and the communication data size for the terminal 50.

The scheduling unit 34 may use, when the scheduling unit 34 determines that the terminal 50 is permitted to communicate in the current determination, the result of subtracting a predetermined value from the scheduling index used in the current determination, as a scheduling index to be used in the upcoming determination. Furthermore, when the scheduling unit 34 determines that the terminal 50 is not permitted to communicate in the current determination, the scheduling unit 34 may use the result of adding a predetermined value to the scheduling index used in the current determination, as a scheduling index to be used in the upcoming determination.

With this configuration of the base station 30, scheduling can be implemented more fairly.

Second Embodiment

Explained in the first embodiment is an example in which a plurality of cells corresponding to respective base stations covering different cells perform the coordinated communication. A second embodiment is related to the coordinated communication among a plurality of cells corresponding to the same base station.

Exemplary Configuration of Base Station

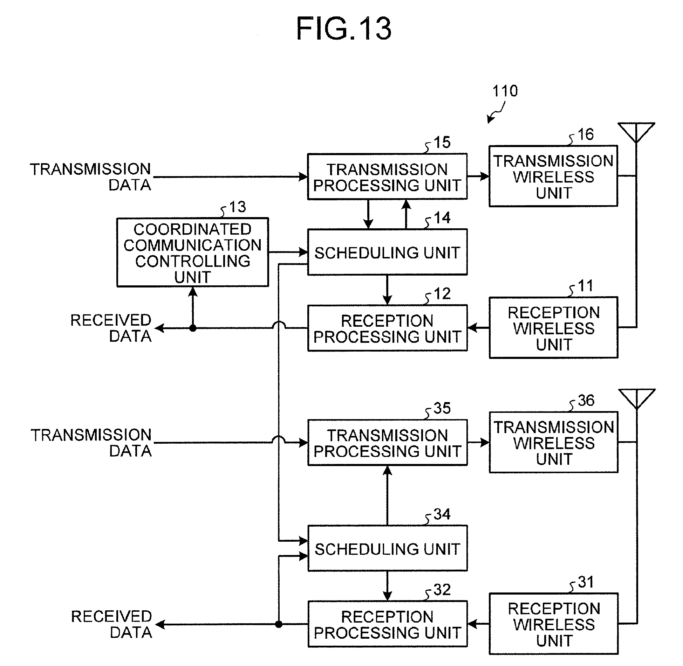

FIG. 13 is a block diagram illustrating an exemplary base station according to the second embodiment. This base station 110 illustrated in FIG. 13 is basically a combination of the base station 10 according to the first embodiment and the base station 30 according to the first embodiment. In the base station 110, the reception wireless unit 11, the reception processing unit 12, the coordinated communication controlling unit 13, the scheduling unit 14, the transmission processing unit 15, and the transmission wireless unit 16 run the processes for the cell C10. The reception wireless unit 31, the reception processing unit 32, the scheduling unit 34, the transmission processing unit 35, and the transmission wireless unit 36 run the processes for the cell C30. In the second embodiment, both of the cell C10 and the cell C30 are cells (or sectors) covered by the same base station 110. Therefore, while the signals exchanged between the scheduling unit 14 and the scheduling unit 34 are exchanged between the base stations in the first embodiment, such signals are exchanged inside of the apparatus in the second embodiment.

Even with the coordinated communication among a plurality of cells corresponding to the same base station, the same effects as those achieved in the first embodiment can be achieved.

Other Embodiments

[1] Explained in the first and the second embodiments is an example in which the scheduling unit 14 calculates the first scheduling index $M_{CoMP}$, and the network IF 33 or the scheduling unit 34 acquires the first scheduling index $M_{CoMP}$, but the present invention is not limited thereto. For example, the scheduling unit 14 may send the parameters to be used in calculating the first scheduling index $M_{CoMP}$ to the scheduling unit 34, and the scheduling unit 34 may calculate the first scheduling index $M_{CoMP}$ based on the received parameters. In such a case, the scheduling unit 34 has a function of acquiring the first scheduling index $M_{CoMP}$.

[2] The scheduling for the coordinated communication explained in the first and the second embodiments may also be used for uplink communication, as well as for downlink communication.

[3] The elements included in each of the units described in the first and the second embodiments do not necessarily need to be physically configured as illustrated in the drawings. In other words, the specific configurations in which the units are distributed or integrated are not limited to those illustrated in the drawings, and any part or the whole of the units may be distributed or integrated functionally or physically to or into any units depending on various loads, utilizations, and the like.

Any part or the whole of various processing functions executed in each apparatus may be executed by a central processing unit (CPU) (or a micro-computer such as a micro-processing unit (MPU) or a micro controller unit (MCU)). Furthermore, any part or the whole of the various processing functions may be executed by a computer program parsed and executed by a CPU (or a micro-computer such as an MPU or an MCU), or by hardware implemented as a wired logic.

The base station and the terminal according to the first and the second embodiments may be implemented in the following hardware configuration, as an example.

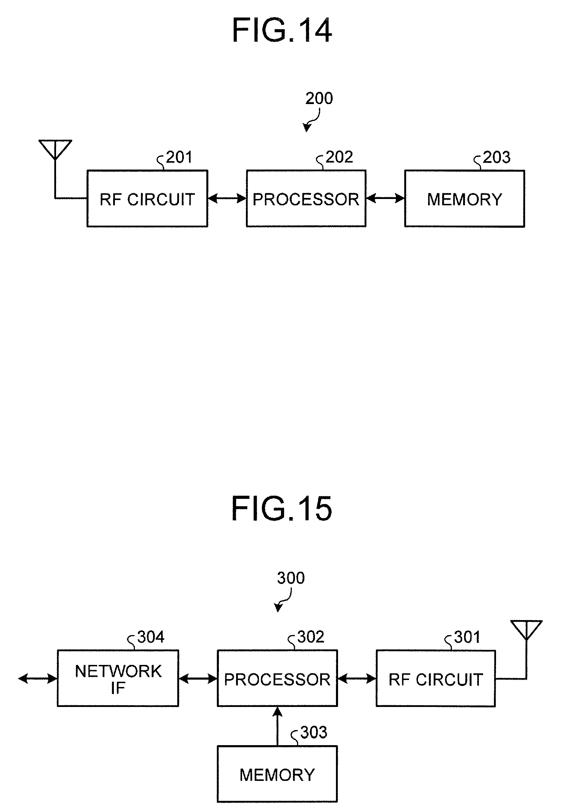

FIG. 14 is a schematic illustrating an exemplary hardware configuration of the terminal. As illustrated in FIG. 14, this terminal 200 includes a radio frequency (RF) circuit 201, a processor 202, and a memory 203.

Examples of the processor 202 includes a CPU, a digital signal processor (DSP), and a field programmable gate array (FPGA). Examples of the memory 203 include a random access memory (RAM) such as a synchronous dynamic random access memory (SDRAM), a read-only memory (ROM), and a flash memory.

The various processing functions executed on the terminal according to the first and the second embodiments may be implemented by causing a processor provided to an amplifier to execute computer programs stored in a memory of various types such as a non-volatile storage medium. In other words, the computer programs corresponding to the respective processes executed by the reception processing unit 52, the channel quality measuring unit 53, the combined quality calculating unit 54, and the transmission processing unit 55 may be recorded in the memory 203, and the processor 202 may execute the computer programs. Furthermore, the processes executed by the reception processing unit 52, the channel quality measuring unit 53, the combined quality calculating unit 54, and the transmission processing unit 55 may be executed in a manner distributed to a plurality of processors such as a baseband CPU and an application CPU. The reception wireless unit 51 and the transmission wireless unit 56 are implemented as the RF circuit 201.

FIG. 15 is a schematic illustrating an exemplary hardware configuration of the base station. As illustrated in FIG. 15, this base station 300 includes an RF circuit 301, a processor 302, a memory 303, and a network IF 304. Examples of the processor 302 include a CPU, a DSP, and an FPGA. Examples of the memory 303 include a RAM such as an SDRAM, a ROM, and a flash memory. Each of the base station 10 and the base station 30 according to the first embodiment is provided with the hardware configuration illustrated in FIG. 15, and the base station 110 according to the second embodiment is provided with the hardware configuration illustrated in FIG. 15.

The various processing functions executed on the base station according to the first and the second embodiments may be implemented by causing a processor provided to an amplifier to execute a computer program stored in a memory of various types such as a non-volatile storage medium. In other words, the computer programs corresponding to the respective processes executed by the reception processing units 12, 32, the coordinated communication controlling unit 13, the scheduling units 14, 34, and the transmission processing unit 15, 35 may be recorded in the memory 303, and the processor 302 may execute the computer programs. The network IFs 17, 33 are implemented as the network IF 304. The reception wireless units 11, 31 and the transmission wireless units 16, 36 are implemented as the RF circuit 301.

Explained herein is an example in which the base station 300 is configured as one apparatus, but the present invention is not limited thereto. For example, the base station 300 may include two separate apparatuses that are a wireless apparatus and a controlling apparatus. In such a configuration, for example, the RF circuit 301 is provided to the wireless apparatus, and the processor 302, the memory 303, and the network IF 304 are provided to the controlling apparatus.

[Explanation of Reference]

| 1 | communication system |
|---|---|
| 10, 30, 110 | base station |
| 11, 31, 51 | reception wireless unit |
| 12, 32, 52 | reception processing unit |
| 13 | coordinated communication controlling unit |
| 14, 34 | scheduling unit |
| 15, 35, 55 | transmission processing unit |
| 16, 36, 56 | transmission wireless unit |
| 17, 33 | network IF |
| 50 | terminal |
| 53 | channel quality measuring unit |
| 54 | combined quality calculating unit |

**Claims**

1. A base station that performs scheduling in a second cell, for a candidate terminal performing coordinated communication using a first cell and the second cell, the base station comprising:

    an acquiring unit configured to acquire a scheduled communication timing for the candidate terminal in the first cell, and a scheduling index for the candidate terminal; and
    a determining unit configured to determine whether the candidate terminal is permitted to communicate at the scheduled communication timing in the second cell, based on the scheduling index for the candidate terminal and a scheduling index for another terminal that is located in the second cell.

2. The base station according to claim 1, wherein the scheduling index for the candidate terminal is a ratio between a first estimated throughput and a second estimated throughput, the first estimated throughput being based on a channel quality of the first cell and a channel quality of the second cell at the candidate terminal and the second estimated throughput being based on a cycle of the scheduled communication timing and a communication data size for the candidate terminal.

3. The base station according to claim 1, wherein the scheduling index for the candidate terminal is an estimated throughput that is based on a channel quality of the first cell and a channel quality of the second cell at the candidate terminal.

4. The base station according to claim 1, wherein the scheduling index for the candidate terminal is an inverse of an estimated throughput that is based on a cycle of the scheduled communication timing and a communication data size for the candidate terminal.

5. The base station according to any one of claims 1 to 4, wherein
the determining unit is configured to use, when the determining unit determines that the candidate terminal is permitted to communicate in current determination, a result of subtracting a predetermined value from the scheduling index used in the current determination as a scheduling index to be used in an upcoming determination, and
the determining unit is configured to use, when the determining unit determines that the candidate terminal is not permitted to communicate in current determination, a result of adding a predetermined value to the scheduling index used in the current determination as the scheduling index to be used in the upcoming determination.

6. A base station configured to communicate using a first cell with a candidate terminal performing coordinated communication using the first cell and a second cell, the base station comprising:

    a scheduling unit configured to determine scheduling information including a communication cycle and a communication data size for the candidate terminal in the first cell, and calculate a scheduling index for the candidate terminal; and
    a transmitting unit configured to transmit the determined scheduling information and the calculated scheduling index to a base station corresponding to the second cell.

7. The base station according to claim 6, wherein the scheduling unit is configured to calculate a ratio between a first estimated throughput and a second estimated throughput as the scheduling index for the candidate terminal, the first estimated throughput being based on a channel quality of the first cell and a channel quality of the second cell at the candidate terminal, and the second estimated throughput being based on the communication cycle and the communication data size.

8. The base station according to claim 6, wherein the scheduling unit is configured to calculate an estimated throughput that is based on a channel quality of the first cell and a channel quality of the second cell at the candidate terminal, as the scheduling index for the candidate terminal.

9. The base station according to claim 6, wherein the scheduling unit is configured to calculate an inverse of an estimated throughput that is based on the communication cycle and the communication data size as the scheduling index for the candidate terminal.

10. A terminal performing coordinated communication using a first cell and a second cell, the terminal comprising:

  a measuring unit configured to measure a channel quality of the first cell and a channel quality of the second cell at the terminal;
  a calculating unit configured to calculate a combined quality by combining the measured channel quality of the first cell and the measured channel quality of the second cell; and
  a transmitting unit configured to transmit information related to the calculated combined quality to a base station corresponding to the first cell.

11. A scheduling method performed in a second cell for a candidate terminal performing coordinated communication using a first cell and the second cell, the scheduling method comprising:

  acquiring a scheduled communication timing for the candidate terminal in the first cell, and a scheduling index for the candidate terminal; and
  determining whether the candidate terminal is permitted to communicate at the scheduled communication timing in the second cell based on the scheduling index for the candidate terminal and a scheduling index for another terminal that is located in the second cell.

# FIG.1

# FIG.2

# FIG.3

# FIG.4

# FIG.5

# FIG.6

# FIG.7

50

```
         ┌──────────────┐        ┌──────────────┐
         │      51      │        │      52      │
    ▽    │  RECEPTION   │        │  RECEPTION   │        RECEIVED
    │    │  WIRELESS    │───────▶│  PROCESSING  │───────▶ DATA
    │    │    UNIT      │        │     UNIT     │
    │    └──────────────┘        └──────────────┘
    │                                   │
    │                           ┌──────────────┐
    │                           │      53      │
    │                           │   CHANNEL    │
    │                           │ QUALITY MEAS-│
    │                           │  URING UNIT  │
    │                           └──────────────┘
    │                                   │
    │                           ┌──────────────┐
    │                           │      54      │
    │                           │  SYNTHETIC   │
    │                           │ QUALITY CAL- │◀────
    │                           │ CULATING UNIT│
    │                           └──────────────┘
    │                                   │
    │    ┌──────────────┐        ┌──────────────┐
    │    │      56      │        │      55      │
    │    │ TRANSMISSION │        │ TRANSMISSION │        TRANSMISSION
    └────│   WIRELESS   │◀───────│  PROCESSING  │◀─────── DATA
         │     UNIT     │        │     UNIT     │
         └──────────────┘        └──────────────┘
```

# FIG.8

```
                    ┌─────────────┐
                    │    START    │
                    └─────────────┘
                           │
                           ▼              ⌐S101
            ┌──────────────────────────────┐
            │     ESTABLISH TARGET USER     │
            └──────────────────────────────┘
                           │
                           ▼              ⌐S102
            ┌──────────────────────────────┐
            │   ESTABLISH TARGET ADJACENT   │
            │             CELL              │
            └──────────────────────────────┘
                           │
                           ▼              ⌐S103
                     ◇ IS DIFFER-  ◇
                    ENCE BETWEEN
                CHANNEL QUALITY OF CELL          NO
                OF LOCAL BASE STATION AND   ─────────┐
                THAT OF TARGET ADJACENT              │
                  CELL SMALLER THAN                  │
                      THRESHOLD?                     │
                           │ YES                     │
                           ▼              ⌐S104      │
            ┌──────────────────────────────┐         │
            │  DETERMINE TARGET USER TO BE  │         │
            │      CANDIDATE TERMINAL       │         │
            └──────────────────────────────┘         │
                           │◄────────────────────────┘
                           ▼              ⌐S105
                   ◇  HAVE ALL    ◇
                ADJACENT CELLS BEEN    NO
                   PROCESSED?      ─────────────┐
                           │                    │      ⌐S106
                           │ YES     ┌──────────────────────────┐
                           │         │  CHANGE TARGET ADJACENT   │
                           │         │           CELL            │
                           │         └──────────────────────────┘
                           ▼              ⌐S107
                   ◇   HAVE      ◇
                ALL USERS BEEN      NO
                  PROCESSED?    ──────────────┐
                           │                  │        ⌐S108
                           │ YES   ┌──────────────────────────┐
                           │       │  CHANGE TARGET USER AND   │
                           ▼       │    TARGET ADJACENT CELL   │
                    ┌─────────┐    └──────────────────────────┘
                    │   END   │
                    └─────────┘
```

18

# FIG.9

START

DETERMINE TRANSMISSION
BANDWIDTH FROM CSI — S201

DETERMINE TRANSMISSION DATA SIZE
FROM TRANSMISSION BANDWIDTH
AND CSI — S202

DETERMINE TRANSMISSION CYCLE
FROM TRANSMISSION DATA SIZE AND
TARGET DATA RATE — S203

CALCULATE FIRST SCHEDULING INDEX
FROM CSI AND TARGET DATA RATE — S204

NOTIFY RESOURCE INFORMATION AND
FIRST SCHEDULING INDEX TO OTHER
BASE STATION — S205

END

# FIG.10

START

S301

ESTABLISH TARGET SUBFRAME

S302

SORT SCHEDULING INDICES
FOR RESPECTIVE USERS
LOCATED IN LOCAL CELL, IN
DESCENDING ORDER OF INDEX
SIZE

S303

DETERMINE WHERE FIRST
SCHEDULING INDEX IS RANKED

S304

IS FIRST
SCHEDULING INDEX IS
RANKED AT $n^{th}$ POSITION
OR HIGHER?

NO

YES

S305

DETERMINE THAT COORDI-
NATED COMMUNICATION IS
PERMITTED

S306

DOES TARGET
SUBFRAME CORRESPOND
TO SCHEDULED COMMUNI-
CATION TIMING?

NO

S307

CHANGE TARGET
SUBFRAME

YES

S308

DETERMINE THAT COORDI-
NATED COMMUNICATION IS
NOT PERMITTED

END

# FIG.11

EP 3 001 752 A1

| CELL C10 | | | | | SCHEDULED COMMUNICA-TION TIMING | | | | SCHEDULED COMMUNICA-TION TIMING |
|---|---|---|---|---|---|---|---|---|---|

NOTIFY CoMP CONDITIONS

✖ NO CoMP COMMUNI-CATION

○ EXECUTE CoMP COMMUNI-CATION

| CELL C30 | | RANKED AT SIXTH IN COMPARI-SON RESULT | RANKED AT FOURTH IN COMPARI-SON RESULT | RANKED AT FIFTH IN COMPARI-SON RESULT | RANKED AT FIFTH IN COMPARI-SON RESULT | RANKED AT FOURTH IN COMPARI-SON RESULT | RANKED AT THIRD IN COMPARI-SON RESULT | RANKED AT FOURTH IN COMPARI-SON RESULT | RANKED AT FIFTH IN COMPARI-SON RESULT |
|---|---|---|---|---|---|---|---|---|---|
| | SUB-FRAME #0 | #1 | #2 | #3 | #4 | #5 | #6 | #7 | #8 |

TIME

# FIG.12

```
            ┌─────────────┐
            │    START    │
            └─────────────┘
                   │
                   ▼
                              S401
              ◇ IS COORDINATED ◇           NO
              COMMUNICATION DETERMINED ─────────────┐
                 TO BE PERMITTED?                    │
                   │                                 │
                   │ YES                             │
                   ▼           S402                  ▼            S403
        ┌────────────────────────┐      ┌────────────────────────┐
        │  CALCULATE NEW FIRST   │      │  CALCULATE NEW FIRST   │
        │   SCHEDULING INDEX BY  │      │ SCHEDULING INDEX BY ADDING │
        │ SUBTRACTING PREDETERMINED │   │ PREDETERMINED VALUE TO │
        │ VALUE FROM CURRENT FIRST │    │ CURRENT FIRST SCHEDULING │
        │    SCHEDULING INDEX    │      │         INDEX          │
        └────────────────────────┘      └────────────────────────┘
                   │                                 │
                   ◄─────────────────────────────────┘
                   ▼
            ┌─────────────┐
            │     END     │
            └─────────────┘
```

# FIG.13

110

TRANSMISSION
DATA → TRANSMISSION PROCESSING UNIT ⌐15 → TRANSMISSION WIRELESS UNIT ⌐16

COORDINATED COMMUNICATION CONTROLLING UNIT ⌐13

SCHEDULING UNIT ⌐14

RECEIVED
DATA ←

RECEPTION PROCESSING UNIT ⌐12 ← RECEPTION WIRELESS UNIT ⌐11

TRANSMISSION
DATA → TRANSMISSION PROCESSING UNIT ⌐35 → TRANSMISSION WIRELESS UNIT ⌐36

SCHEDULING UNIT ⌐34

RECEIVED
DATA ←

RECEPTION PROCESSING UNIT ⌐32 ← RECEPTION WIRELESS UNIT ⌐31

# FIG.14

# FIG.15

## INTERNATIONAL SEARCH REPORT

| | International application No. |
|---|---|
| | PCT/JP2013/064416 |

A. CLASSIFICATION OF SUBJECT MATTER
*H04W72/12*(2009.01)i, *H04W28/16*(2009.01)i

According to International Patent Classification (IPC) or to both national classification and IPC

B. FIELDS SEARCHED

Minimum documentation searched (classification system followed by classification symbols)
H04W72/12, H04W28/16

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2013 |
| Kokai Jitsuyo Shinan Koho | 1971–2013 | Toroku Jitsuyo Shinan Koho | 1994–2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2013-098866 A (Sharp Corp.), 20 May 2013 (20.05.2013), paragraphs [0059] to [0065]; fig. 9 (Family: none) | 1-11 |
| X<br>A | JP 2011-035910 A (NTT Docomo Inc.), 17 February 2011 (17.02.2011), paragraphs [0029] to [0043] & US 2011/0034163 A1 & CN 101989868 A | 10<br>1-9,11 |
| A | CATT, The Scheduling Priority in CoMP, 3GPP TSG RAN WG2 Meeting #67bis R2-095490, 2009.10.16, p1-p3 (http://www.3gpp.org/ftp/tsg_ran/WG2_RL2/TSGR2_67bis/Docs/R2-095490.zip) | 1-11 |

☒ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 June, 2013 (10.06.13) | 18 June, 2013 (18.06.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2013/064416

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2005-184649 A  (Hitachi Cable, Ltd.), 07 July 2005 (07.07.2005), paragraphs [0031] to [0034]; fig. 1 (Family: none) | 2,4,5,7,9 |

Form PCT/ISA/210 (continuation of second sheet) (July 2009)

## INTERNATIONAL SEARCH REPORT

| International application No. |
| --- |
| PCT/JP2013/064416 |

**Box No. II     Observations where certain claims were found unsearchable (Continuation of item 2 of first sheet)**

This international search report has not been established in respect of certain claims under Article 17(2)(a) for the following reasons:

1. ☐ Claims Nos.:
    because they relate to subject matter not required to be searched by this Authority, namely:

2. ☐ Claims Nos.:
    because they relate to parts of the international application that do not comply with the prescribed requirements to such an extent that no meaningful international search can be carried out, specifically:

3. ☐ Claims Nos.:
    because they are dependent claims and are not drafted in accordance with the second and third sentences of Rule 6.4(a).

**Box No. III     Observations where unity of invention is lacking (Continuation of item 3 of first sheet)**

This International Searching Authority found multiple inventions in this international application, as follows:
    (Invention 1) the invention of claims 1-5, 11 is related to a base station which determines whether to permit communication by a terminal candidate at communication planned timing in a second cell based on a scheduling index of the terminal candidate for performing cooperative communication and a scheduling index of another terminal in a service area of the second cell. (Continued to extra sheet)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**     ☐ The additional search fees were accompanied by the applicant's protest and, where applicable, the payment of a protest fee.

        ☐ The additional search fees were accompanied by the applicant's protest but the applicable protest fee was not paid within the time limit specified in the invitation.

        ☐ No protest accompanied the payment of additional search fees.

Form PCT/ISA/210 (continuation of first sheet (2)) (July 2009)

**INTERNATIONAL SEARCH REPORT**

International application No.

PCT/JP2013/064416

Continuation of Box No.III of continuation of first sheet(2)

(Invention 2) the invention of claims 6-9 is related to a base station which determines scheduling information including a communication cycle and a communication data size of a terminal candidate for performing cooperative communication in a first cell, calculates a scheduling index of the terminal candidate, and transmits the determined scheduling information and the calculated scheduling index to a base station corresponding to a second cell.

(Invention 3) the invention of claim 10 is related to a terminal which transmits information relating to a combined quality calculated by combining a communication channel quality of a first cell and a communication channel quality of a second cell to a base station corresponding to the first cell.

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012212956 A
- JP 2011071993 A
- JP 2010258693 A

**Non-patent literature cited in the description**

- Coordinated multipoint transmission/reception techniques for LTE-Advanced. *IEEE Wireless Commun. Mag.,* June 2010, vol. 17 (4
- Greedy and progressive user scheduling for CoMP wireless networks. *Proc. IEEE International Conference on Communication,* June 2012